# EUROPEAN PATENT APPLICATION

(11) **EP 4 644 337 A1**
(43) Date of publication of application: **05.11.2025**
(21) Application number: 24180196.8
(22) Date of filing: 05.06.2024
(51) Int. Cl.: C02F 1/66, C02F 5/14, C02F 103/34, C02F 1/68

(54) **CHEMICAL COMPOSITION TO REDUCE CALCIUM CARBONATE CONCENTRATION IN WATER**

(30) Priority: 29.04.2024 EP 24173118
(71) Applicant: Versuni Holding B.V., 1082 MD Amsterdam (NL)
(72) Inventor: XU, Yanjun, 1082 MD Amsterdam (NL); NG, Bryan, 1082 MD Amsterdam (NL); BRUGGINK, Wilhelmus HM, 1082 MD Amsterdam (NL)
(74) Representative: Vollering, Stefanus Franciscus Maria

(57) **Abstract**

The invention relates to a chemical composition for reducing calcium carbonate concentration in water. The chemical composition comprises an acid descaler, and a corrosion inhibitor. The acid descaler is a glycolic acid.

## Description

### FIELD OF THE INVENTION

The invention relates to a chemical composition to reduce calcium carbonate concentration in water.

The invention may be used in the field of domestic appliances, such as garment care field, along with any devices comprising a steam generator generating steam from water.

### BACKGROUND OF THE INVENTION

Drinking water quality varies based on regional sources, affecting mineral content dissolved in water in the form of ions. Major ions, including positively charged cations such as calcium, magnesium, sodium and negatively charged anions such as bicarbonate, chloride, and sulfate anions, are balanced for electroneutrality.

Tap water hardness indicates the presence of dissolved metal ions, mainly calcium and magnesium, typically measured in milligrams of calcium carbonate per liter. According to WHO's Guidelines for Drinking-water Quality, water containing calcium carbonate at concentrations below 60 mg/L is generally considered as soft.

When a heated garment generating device such as a steamer, steam iron and pressurized steam generator is in operation, the water reservoir is filled with locally available tap water of various hardness. To aid de-wrinkling with steaming, this water is delivered by the water-supply system from the water reservoir to the steam chamber.

Due to the poor solubility of carbonate salts such as calcium and magnesium carbonate, these carbonate salts are the first to precipitate as scale in a heated environment, and are the key contributor to the scale-related failures seem in a steam generating device. Two modes of such failure include the choking of water-supply system and/or the congestion of steam chamber volume, thereby depleting the surface area for steaming.

To prevent these failures, various solutions are currently adopted in the market.

One such solution involved the use of ion exchange resins which are capable of partial or complete demineralization. However, such resins have limited descaling capacity, and can reach complete exhaustion way before the intended lifetime of these devices. This means either a large volume of resins is needed or frequent replacement of the ion exchange resin-containing cartridges is required.

There are many other commercially available descaling acids, typically sold as separate consumables, are often not suitable to be directly integrated in these devices due to various drawbacks.

For instance, citric acid, one of the most commonly used acidic descalers, form an insoluble calcium citrate salt when combined with the calcium ions in standard tap water, leading to more insoluble scale formation if it is directly incorporated in the steam chamber. Vinegar, another one of the most commonly available household descaler has an inherent smell that is deemed undesirable by most people for it to be used in such devices. Strong acids like hydrochloric acid and sulphamic acid are also frequently employed as chemical descalers, yet they pose significant risks due to their corrosive and hazardous nature, potentially causing severe injuries to individuals.

In addition, EP0610997 suggested that by using phosphonate compounds as a scale-growth inhibiting agent, obstruction of the water-supply system is overcome. However, this principal does not change the fundamental composition of the mineral content in water, and hence this does not address the issue of scale built-up in the steaming surface of the steam chamber.

### OBJECT AND SUMMARY OF THE INVENTION

It is an object of the invention to propose an improved chemical composition to reduce calcium carbonate concentration in water.

The invention is defined by the independent claims. The dependent claims define advantageous embodiments.

To this end, the chemical composition comprises:
- an acid descaler, and
- a corrosion inhibitor.

The inclusion of a corrosion inhibitor has been shown not just to enhance corrosion resistance but also to exhibit a synergistic effect when coupled with an acid descaler, as evidenced with experimental data.

Phosphonate scale inhibitor are weak acids with phosphonic acid groups that lowers the pH of treated water.

This pH reduction effectively decreases carbonate hardness, thereby reducing amount of glycolic acid needed to be used.

Detailed explanations and other aspects of the invention will be given below.

### BRIEF DESCRIPTION OF THE DRAWINGS

None.

### DETAILED DESCRIPTION OF THE INVENTION

The invention proposes an improved chemical composition to reduce calcium carbonate concentration in water.

Regarding the hardness of water to be treated, the invention is meant to provide a solution for water to be treated having an initial calcium carbonate concentration of above 60 mg/L. Indeed, water containing calcium carbonate at concentrations below 60 mg/L is generally considered as soft.

To this end, the chemical composition comprises:
- an acid descaler, and
- a corrosion inhibitor.

The acid descaler is for reducing the pH of the water.

The corrosion inhibitor is for corrosion inhibition with a secondary function of scale inhibition.

### The acid descaler

Following Table 1 gives key active ingredients of the chemical composition according to the invention.

**Table 1 - Key active ingredients of the invention**

| **Key active ingredients** | **Preferred dosage in g per liter of water to be treated** | **Function** |
|---|---|---|
| Acid descaler, | 0.1 - 0.8 | Reducing the pH of the water |
| most preferably glycolic acid | | |
| Corrosion inhibitor, | 0.01 - 1 | Corrosion inhibition with a secondary function of scale inhibition |
| preferably phosphonate* type such as the ones listed in Table 3, | | |
| most preferably Nitrilotris(methylenephosphonic Acid) (ATMP) | | |

The optimal acid descaler to be incorporated should have a low molar mass, odourless, and capable of forming soluble salts when reacting with cations found in standard tap water. Glycolic acid, commonly used in skincare products, is found to meet these criteria.

Following Table 2 gives examples of acid descaler that can be used in the chemical composition according to the invention.

**Table 2 - Examples of acid descaler**

| **Product description** | **Molecular structure** | **Molar mass (g/mol)** | **Solubility of calcium salt at room temperature and neutral pH** | **Odour** |
|---|---|---|---|---|
| Glycolic acid | 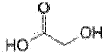 | 76 | Soluble | Generally odourless |
| Citric acid | 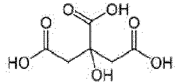 | 192 | Low | Citrus-like odour |
| Phosphoric acid | 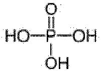 | 98 | Low | Generally odourless |
| Lactic acid | 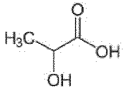 | 90 | Soluble | Sour or acidic odour |
| Acetic acid | 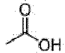 | 60 | Soluble | Strong vinegar-like odour |

### The corrosion inhibitor

In the field of water treatment, there is often a connection between corrosion inhibition and scale inhibition. And scale inhibitors are often composed of chemicals that can also inhibit corrosion. Commonly used scale inhibitors include polyphosphates, phosphonate, synthetic polymers including poly acrylic acids (PAA), poly methacrylic acids (PMAA) and poly maleic acids (PMA) etc, and other chelating agents such as EDTA.

For application on a steam generating device, phosphonate inhibitors* are preferred because of their high heat resistance as well as the fact that they can be used as an additive at sub-stoichiometric levels, differentiating them from materials that function according to strict stoichiometric ratios such as EDTA.

Following Table 3 gives examples of corrosion and scale inhibitor (*phosphonate inhibitors) used in the chemical composition according to the invention.

**Table 3 - Examples of corrosion and scale inhibitor (*phosphonate inhibitors)**

| **Product description** | **Acronym** | **Molecular structure** | **Molar mass (g/mol)** |
|---|---|---|---|
| 2-Phosphonobutane-1,2,4-tricarboxylic Acid | PBTC* | 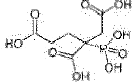 | 270 |
| Nitrilotris (methylenephosphonic Acid) | ATMP" | 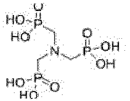 | 299 |
| Etidronic acid | HEDP* | 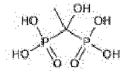 | 206 |
| Trisodium N-(1-Carboxylatoethyf) iminodiacetate | MGDA-Na3 | 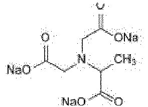 | 271 |
| Ethylenediaminetetraacetic Acid | EDTA | 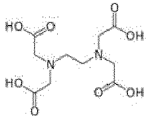 | 292 |

Following Table 4 gives some examples of the chemical composition according to the invention, on the influence of Glycolic Acid and ATMP on pH and Carbonate Hardness of the water before and after treatment according to the invention.

**Table 4 - Examples of how the levels of Glycolic Acid and ATMP influence the pH and Carbonate Hardness of the treated water, using a representative hard water**

| **Composition of actives used for the treatment** | **Before treatment** | | **After treatment** | |
|---|---|---|---|---|
| | **pH** | **Carbonate hardness (mg/L CaCO₃)** | **pH** | **Carbonate hardness (mg/L CaCO₃)** |
| Glycolic acid: 0.2 g/L | 7.8 | 253 | 5.8 | 105 |
| ATMP: 0 g/L | | | | |
| Glycolic acid: 0.2 g/L | 7.8 | 253 | 4.8 | 30 |
| ATMP: 0.3 g/L | | | | |

### Other ingredients

Preferably, preservatives can be added as they are crucial for safety, since they inhibit the growth of bacteria, fungi and mould.

As the mixture of acid and corrosion inhibitor is readily soluble in water, this mixture may for instance be applied in the form of aqueous solution or solid, potential embodiment suitable for steam generating devices in accordance with the invention comprises of:
1. introducing this mixture in the form of an aqueous solution offered to consumers as an external consumable, this requires consumer to pour specified amount of the mixture into the water reservoir at a pre-defined ratio. The mixture solution is supplied in a bottle. Such embodiment will require a customer to top up the water reservoir to its full capacity of a known volume of water, a graduated plastic cup will be provided with instruction on the appropriate amount of mixture solutions to be added.
2. introducing this mixture in the form of an aqueous solution offered to consumers as an external consumable, this requires consumer to add specified amount of the mixture into the water reservoir at a pre-defined ratio. The mixture solution is supplied in a graduated syringe. Such embodiment will require a customer to top up the water reservoir to its full capacity of a known volume of water, instruction on the appropriate amount of mixture solutions to be added with the graduated syringe will be provided.
3. introducing this mixture in the form of an aqueous solution with a metering and auto-dosing system into the water reservoir. The mixture solution is supplied in a cartridge that is sold as a consumable, which can be attached to the device. Such embodiment will require a customer to top up the water reservoir to its full capacity of a known volume of water, an automatic metered dosing system will precisely dispense an appropriate amount of the mixture solution into the water reservoir when the "dosing button" is pressed.
4. introducing the mixture in the form of a solid mixture that is compressed into pellet/tablet/bead/hydrogel, preferably to accommodate solid mixture in an envelope which consists either partly or completely of a fine-mesh material to avoid obstruction of the water-supply system if the solid mixture were to decompose into smaller parts after a prolonged period of time. In such an embodiment, the solid mixture enclosed in its envelope is placed inside the water reservoir, and its active ingredients are gradually released as they dissolve in the water.

For example, the invention can be used along with garment steamers (handheld or with a stand), pressurized steam generator irons, steam irons, garment de-wrinkling devices, steam generating devices, heat producing devices. The garment steamers comprise a water reservoir, a steam generator and a water-supply system for conveying water from the water reservoir to the steam generator. The water reservoir contains a certain quantity of the chemical composition according to the invention to reduce the concentration of calcium carbonate of water.

The above embodiments as described are only illustrative, and not intended to limit the technique approaches of the present invention. Although the present invention is described in details referring to the preferable embodiments, those skilled in the art will understand that the technique approaches of the present invention can be modified or equally displaced without departing from the protective scope of the claims of the present invention. In particular, although the invention has been described in the field of garment care, it can be applied to any other field where calcium carbonate concentration in water needs to be reduced. In the claims, the word "comprising" does not exclude other elements or steps, and the indefinite article "a" or "an" does not exclude a plurality. Any reference signs in the claims should not be construed as limiting the scope.

## Claims

1. Chemical composition for reducing calcium carbonate concentration in water, the chemical composition comprising:
- an acid descaler, and
- a corrosion inhibitor,
wherein the acid descaler is a glycolic acid.

2. Chemical composition as claimed in claim 1, wherein the corrosion inhibitor is Nitrilotris (methylenephosphonic Acid) (ATMP)

3. Chemical composition as claimed in claim 1 or 2, wherein the dosage in grams per liter of water to be treated are as follows:
- in the range [0.1 ; 0.8] for the acid descaler,
- in the range [0.01 ; 1] for the corrosion inhibitor.

4. Chemical composition as claimed in any one of the preceding claims, wherein the chemical composition takes an aqueous form.

5. Chemical composition as claimed in any one of the preceding claims, wherein the chemical composition takes a solid form.

6. A garment care device comprising a water reservoir, a steam chamber and a water-supply system for conveying water from the water reservoir to the steam chamber, wherein said water reservoir contains a certain quantity of the chemical composition as claimed in any one of the preceding claims.
